# EUROPEAN PATENT APPLICATION

(11) **EP 4 414 079 A1**
(43) Date of publication of application: **14.08.2024**
(21) Application number: 24155301.5
(22) Date of filing: 01.02.2024
(51) Int. Cl.: B02C 19/00, B09B 3/30, C22B 7/00, H01M 10/54

(54) **METHOD FOR RECOVERING ELECTRODE MATERIAL**

(30) Priority: 10.02.2023 JP 2023019312
(71) Applicant: TOYOTA JIDOSHA KABUSHIKI KAISHA, Toyota-shi, Aichi-ken, 471-8571 (JP)
(72) Inventor: YOKOYAMA, Tomohiro, Toyota-shi, 471-8571 (JP)
(74) Representative: D Young & Co LLP

(57) **Abstract**

A method of recovering an electrode material of the present disclosure comprises:
providing an electrode laminate roll in which an electrode laminate is wound, wherein the electrode laminate includes a current collector foil and an electrode material laminated on at least one surface of the current collector foil,
unwinding the electrode laminate from the electrode laminate roll and transporting the electrode laminate in the longitudinal direction, and
spraying dry ice particles onto the electrode laminate during transport and crushing the electrode material to separate the electrode material from the current collector foil.

## Description

### [Technical Field]

The present invention relates to a method for recovering an electrode material.

### [Background Art]

A conventional method of recycling electrode materials includes disassembling the primary battery or the secondary battery such as a lithium ion battery after using it, and recovering and recycling electrode materials such as a positive electrode mixture (positive electrode active material) and a negative electrode mixture (negative electrode active material).

In this context, Patent Literature 1 discloses a method of recovering a catalyst from an object in which a catalyst layer is formed on a surface of an electrolyte membrane or a diffusion layer for a fuel cell. The method includes a step of separating the catalyst from the electrolyte membrane or the diffusion layer by causing a solid particles such as dry ice particles or ice particles to collide with the catalyst layer formed on the surface of the electrolyte membrane or the diffusion layer, and a step of recovering the separated catalyst.

### [Citations List]

### [Patent Literature]

[Patent Literature 1] JP 2006-95367 A

### [Summary of the invention]

### [Technical Problem]

As stated above, a conventional method of recycling electrode materials includes disassembling the primary battery or the secondary battery after using it, and recovering and recycling the electrode material. On the other hand, in the manufacturing stage of the primary battery or the secondary battery, when the electrode laminate is formed by laminating the electrode material on the current collector foil, a defect may occur, and the obtained electrode laminate may be unable to be used. The authors of the present disclosure have found that it is preferable to recover the electrode material from the unusable electrode laminate which is generated during the manufacturing stage of the battery as stated above.

In view of the foregoing, the present disclosure provides a method for recovering an electrode material.

### [Solution to Problem]

### <Embodiment 1>

A method of recovering an electrode material comprising:
providing an electrode laminate roll in which an electrode laminate is wound, wherein the electrode laminate includes a current collector foil and an electrode material laminated on at least one surface of the current collector foil;
unwinding the electrode laminate from the electrode laminate roll and transporting the electrode laminate in the longitudinal direction; and
praying dry ice particles onto the electrode laminate during transport and crushing the electrode material to separate the electrode material from the current collector foil.

### <Embodiment 2>

The method according to embodiment 1, wherein a gas is blown at the same time as the spraying of the dry ice particles onto the electrode laminate or after the spraying of the dry ice particles onto the electrode laminate.

### <Embodiment 3>

The method according to embodiment 1 or 2, wherein touch rolls for adjusting a tension of the electrode laminate are provided on an upstream side of a position at which the dry ice particles are sprayed on the electrode laminate and on a downstream side of a position at which the dry ice particles are sprayed on the electrode laminate, and thereby, the tension is applied to the electrode laminate at a position at which the dry ice particles are sprayed onto the electrode laminate.

### <Embodiment 4>

The method according to any one of embodiments 1 to 3, wherein the electrode material is laminated on both sides of the current collector foil, and the dry ice particles are sprayed onto both surfaces of the electrode laminate.

### <Embodiment 5>

The method according to embodiment 2, embodiment 3 citing embodiment 2, embodiment 4 citing embodiment 2, or embodiment 4 citing embodiment 3 citing embodiment 2, wherein the gas is dried air or nitrogen gas.

### <Embodiment 6>

The method according to embodiment 2, embodiment 3 citing embodiment 2, embodiment 4 citing embodiment 2, embodiment 4 citing embodiment 3 citing embodiment 2, or embodiment 5, wherein the gas is a heated gas.

### <Embodiment 7>

The method according to any one of embodiments 1 to 6, further comprising winding the current collector foil separated from the electrode material with a winding roll, and providing a current collector foil roll.

### [Advantageous Effects of Invention]

According to the present disclosure, a method of recovering an electrode material can be provided.

### [Brief Description of Drawings]

[Fig. 1]

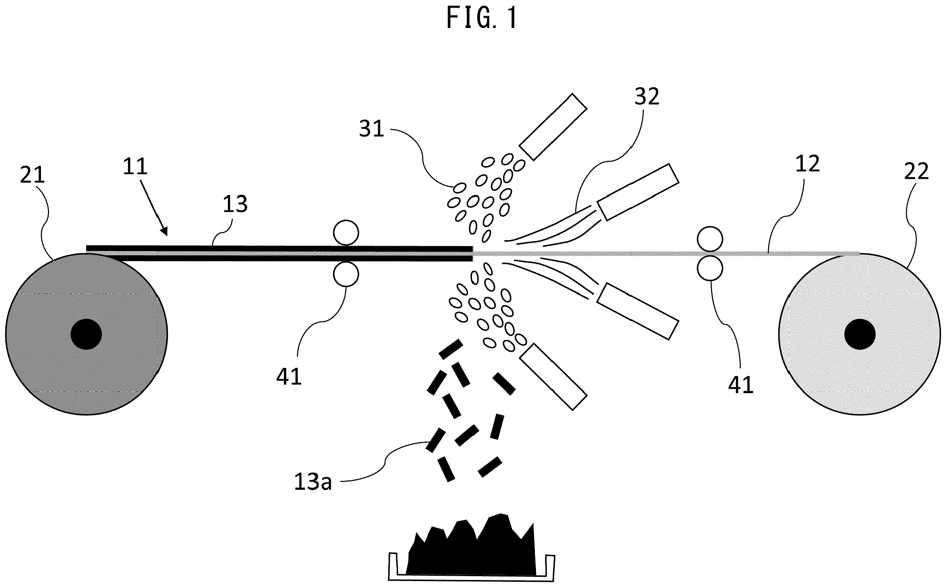

FIG. 1 is a schematic diagram illustrating one embodiment of a method of the present disclosure for recovering an electrode material.

### [Description of Embodiments]

The method of the present disclosure for recovering an electrode material may be a method for separating and recovering an electrode material of a primary battery or a secondary battery, for example, a lithium-ion primary battery or a secondary battery, from a current collector foil. The electrode material to be recovered by the method of the present disclosure includes a positive electrode active material, a negative electrode active material, a conductive agent, a binder, or the like. It may be a single substance or a combination of a plurality of them such as a mixture. Therefore, according to the method of the present disclosure, a positive electrode active material or a negative electrode active material, particularly a positive electrode active material, can be recovered and recycled.

FIG. 1 is a schematic diagram illustrating an embodiment of a method of the present disclosure for recovering an electrode material. Hereinafter, the method of the present disclosure shown in FIG. 1 will be described in detail. However, the method of the present disclosure is not limited to this embodiment.

### (Provide of Electrode Laminate Roll)

In the method of the present disclosure, an electrode laminate roll 21 is provided on which an electrode laminate 11 is wound. The electrode laminate includes a current collector foil 12 and an electrode material 13 laminated on at least one surface of the current collector foil.

The current collector foil may be, for example, a metal foil containing aluminum. The metal foil may be an aluminum foil, a metal foil such as SUS, Cu, Ni, Fe, Ti, Co or Zn, a foil using a cladding material of a metal such as SUS, Cu, Ni, Fe, Ti, Co or Zn, and Al, or a foil in which Al is coated on a metal surface.

The electrode material may be a positive electrode mixture (positive electrode active material) or a negative electrode mixture (negative electrode active material). Especially, it may be a positive electrode mixture. For example, the positive electrode mixture may include an oxide active material, a sulfide active material, and the like. Further, it may comprise a binder such as PESE (polyethylene sebacate), PPSU (polyphenylsulfone), PBI (polybenzimidazole), PESU (polyethersulfone). Further, the electrode material may comprise a carbon material such as acetylene black, furnace black, channel black, thermal black, activated carbon, carbon, carbon fiber, graphite, and the like.

### (Unwinding from Electrode Laminate Roll)

In the method of the present disclosure, the electrode laminate 11 is unwound from the electrode laminate roll 21 and transported in the longitudinal direction. It should be noted that in the context of the present disclosure, the "longitudinal direction" means the length direction of the electrode laminate 11, that is, the direction in which the electrode laminate 11 is wound on the electrode laminate roll 21.

The unwinding of the electrode laminate from the electrode laminate roll can be carried out in any known method. For example, the electrode laminate can be unwound by rotating the electrode laminate roll using a motor and transported while supporting the unwound electrode laminate with a support roller or while the unwound electrode laminate is suspended in the air.

### (Separation of Electrode Material)

In the method of the present disclosure, the electrode material 13 is crushed and separated from the current collector foil 12 by spraying dry ice particles 31 onto the electrode laminate 11 during transport.

The particle size of the dry ice particles sprayed onto the electrode laminate is not limited. For example, it may be 1 to 100µm. The injection rate of the dry ice particles 31 is not limited. For example, it may be 20 to 200m/s. In the present disclosure, the particle size is defined as the average value of the maximum diameter when observing the particles with a microscope.

The dry ice particles 31 are sprayed, which causes the dry ice particles to hit the electrode material, and the impact causes the electrode material to be crushed and the electrode material is separated (peeled) from the current collector foil. Further, since the dry ice particles are at a low temperature, a temperature of the electrode laminate 11 drops to low temperature due to spraying the dry ice particles 31, and as a result, the resin component in the electrode material shrinks, cures, and embrittles, thereby promoting crushing of the electrode material and separation of the electrode material from the current collector foil. This process can be carried out in an inert gas atmosphere, especially in a nitrogen atmosphere or in a carbon dioxide atmosphere. In this case, the carbon dioxide atmosphere can also be obtained by carbon dioxide generated from dry ice. When this process is performed in an inert gas atmosphere as described above, deterioration of the active material contained in the electrode material can be suppressed. In addition, when this process is performed in a carbon dioxide active atmosphere, metal lithium or the like contained in the electrode material can be stabilized by carbonation with carbon dioxide.

At the same time as spraying dry ice particles onto the electrode laminate, or after spraying dry ice particles onto the electrode laminate, a gas may be sprayed onto the electrode laminate. By blowing the gas in this manner, sublimation of the dry ice remaining on the electrode laminate can be promoted, thereby promoting crushing of the electrode material and separation thereof from the electrode laminate.

The gas blown onto the electrode laminate may be dry air, i.e., air which has undergone a process of removing moisture. The gas may be nitrogen gas, or may be a heated gas.

In this context, the heating gas does not necessarily mean a high-temperature gas, but means a gas which has been heated to some extent. If the gas is a heated gas, this is preferable, since the dry ice is easily sublimated.

By spraying the dry ice particles 31 onto the electrode material, the electrode material 13 and 13a separated from the current collector foil are separated from each other. The separated material is blown away by the sprayed dry ice particles 31 and optionally the blowing gas 32, and only the current collector foil 12 from which the electrode material is peeled off remains.

The dry ice particles and the gas may be sprayed on one surface or on both surfaces of the electrode laminate. When dry ice particles and optionally a gas are blown on both surfaces, the temperature difference between both surfaces becomes small, with the result that wrinkles (unevennesses) are less likely to occur in the current collector foil.

### (Application of Tension)

Upstream from the position for spraying dry ice particles 31 on the electrode laminate 11, and downstream therefrom, touch rolls 41 for adjusting the tension of the electrode laminate 11 may be provided, and tension may be applied to the electrode laminate 11 at the position for spraying dry ice particles 31 and gas 32 on the electrode laminate 11 by the touch rolls.

Such application of tension is preferable for suppressing flapping of the electrode laminate when the dry ice particles are sprayed. The downstream side touch roll 41 may be located downstream from the position where the gas 32 is blown onto the electrode laminate 11.

### (Winding Current Collector Foil)

The current collector foil 12 from which the electrode material is peeled off may be wound by the winding roll 22 to form a current collector foil roll. The wound current collector foil may be reused as a metal foil, since the electrode material is removed.

The electrode material 13a separated from the current collector foil 12 may be dropped and collected separately, for example. The recovered electrode material may then be re-slurried, as is or after a process such as cleaning and refining, by adding a solution such as NMP(N-methyl-2-pyrrolidone) solution, and may be used again for coating the electrode material.

An embodiment of the present disclosure is described in detail above. However, the present disclosure is not limited to the above-described embodiment, and various design changes can be made without departing from the spirit thereof.

### [Reference Sings List]

11 Electrode laminate
12 Current collector foil
13, 13a Electrode material
21 Electrode laminate roll
22 Winding roll
31 Dry ice particles
32 Gas
41 Touch Roll

## Claims

1. A method of recovering an electrode material comprising:
providing an electrode laminate roll in which an electrode laminate is wound, wherein the electrode laminate includes a current collector foil and an electrode material laminated on at least one surface of the current collector foil;
unwinding the electrode laminate from the electrode laminate roll and transporting the electrode laminate in the longitudinal direction; and
spraying dry ice particles onto the electrode laminate during transport and crushing the electrode material to separate the electrode material from the current collector foil.

2. The method according to claim 1, wherein a gas is blown at the same time as the spraying of the dry ice particles onto the electrode laminate or after the spraying of the dry ice particles onto the electrode laminate.

3. The method according to claim 1 or 2, wherein touch rolls for adjusting a tension of the electrode laminate are provided on an upstream side of a position at which the dry ice particles are sprayed on the electrode laminate and on a downstream side of a position at which the dry ice particles are sprayed on the electrode laminate, and thereby, the tension is applied to the electrode laminate at a position at which the dry ice particles are sprayed onto the electrode laminate.

4. The method according to any one of claims 1 to 3, wherein the electrode material is laminated on both sides of the current collector foil, and the dry ice particles are sprayed onto both surfaces of the electrode laminate.

5. The method according to claim 2, wherein the gas is dried air or nitrogen gas.

6. The method of claim 2, wherein the gas is a heated gas.

7. The method according to any one of claims 1 to 6, further comprising winding the current collector foil separated from the electrode material with a winding roll, and providing a current collector foil roll.
